**Europäisches Patentamt**

**European Patent Office**

**Office européen des brevets**

(19)

(11) **EP 0 893 281 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.⁷: **B60C 1/00**, C08K 3/36, C08K 3/04

(21) Anmeldenummer: **98113630.2**

(22) Anmeldetag: **22.07.1998**

(54) **Kautschukmischung, insbesondere für Reifenlaufstreifen**

Rubber composition, especially for tyre treads

Composition de caoutchouc, notamment pour bandes de roulement pour pneumatiques

(84) Benannte Vertragsstaaten:
**AT BE DE FR GB IT**

(30) Priorität: **22.07.1997 DE 19731426**

(43) Veröffentlichungstag der Anmeldung:
**27.01.1999 Patentblatt 1999/04**

(73) Patentinhaber: **Continental Aktiengesellschaft**
**30165 Hannover (DE)**

(72) Erfinder:
- **Hendrik, Stevens Dr.**
  **30419 Hannover (DE)**
- **Ulf, Wilhelm Dr.**
  **30827 Garbsen (DE)**

(56) Entgegenhaltungen:
**US-A- 5 225 011**

- **PATENT ABSTRACTS OF JAPAN vol. 097, no. 007, 31. Juli 1997 & JP 09 087427 A (SUMITOMO RUBBER IND LTD), 31. März 1997**
- **DATABASE WPI Section Ch, Week 9141 Derwent Publications Ltd., London, GB; Class A95, AN 91-298621 XP002079886 & JP 03 197209 A (BRIDGESTONE CORP) , 28. August 1991**
- **DATABASE WPI Section Ch, Week 7815 Derwent Publications Ltd., London, GB; Class A12, AN 78-28028A XP002079887 & JP 53 023378 A (TOYO RUBBER IND CO LTD) , 3. März 1978**

EP 0 893 281 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine schwefelvemetzbare Reifenlaufstreifenkantschnkmischung.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. So werden z.B. der Rollwiderstand, die Haftung auf trockner und nasser Fahrbahn und der Abrieb eines Reifenlaufstreifens von dessen Mischungszusammensetzung beeinflusst. Es ist aber auch erforderlich, dass der Reifenlaufstreifen so ausgebildet ist, dass beim Überfahren von scharfen Bordsteinkanten bzw. spitzen oder runden Gegenständen keine Risse im Laufstreifen entstehen bzw. Stücke aus dem Reifenlaufstreifen herausbrechen können. Diese Risse, Schuppen bzw. Ausbrüche (Chipping and Chunking) können letztendlich zur Zerstörung des Reifens führen.

Die Aufgabe der hier vorliegenden Erfindung besteht darin, Kautschukmischungen insbesondere für die Herstellung von Reifenlaufstreifen bereitzustellen, die im vulkanisierten Reifenlaufstreifen die Bildung von Rissen (Verletzungen), Schuppen bzw. Ausbrüchen bei Überfahren von scharfen bzw. spitzen/runden Gegenständen vermindert, so dass die Verschleißfestigkeit bei hoher Beanspruchung verbessert wird.

Gelöst wird diese Aufgabe erfindungsgemäß dadurch, dass die schwefelvernetzbare ReifenLaufstreifenkantschukmischung zumindest folgende Bestandteile bezogen auf 100 Gewichtseile aller Kautschukkomponenten, enthält:

a) 60-100 pphr Naturkautschuk (NR) und/oder synthetisches Polyisopren (IR) mit einem cis-1,4-Anteil > 90 Molprozent,
b) 5-35 pphr aktivierte Kieselsäure, wobei der Aktivierungsgrad bezogen auf die Oberfläche der Kieselsäure $\leq 40$ % beträgt,
c) 10-75 pphr Ruß, wobei der Füllstoffanteil von b) und c) 45-80 pphr beträgt,
d) 0-40 pphr zumindest eines weiteren Dienelastomers,
e) zumindest ein Resorcin-Formaldehydharz,
f) weitere übliche Zusatzstoffe und Vernetzungschemikalien,

wobei die Kautschukmischung im vulkanisierten Zustand eine Hochgeschwindigkeitsreißenergie $\geq 12$ MJ/m$^3$ und einen Spannungswert 300 % 10-16 MPa aufweist.

Überraschenderweise zeigen diese erfindungsgemäßen Kautschukmischungen im vulkanisierten Zustand hervorragende Ergebnisse hinsichtlich der Ausbruchsneigung und hinsichtlich der Schnittverletzungen. Es wurde bisher festgestellt, dass der Spannungswert (Reißdehnung) 300 % durch den Füllgrad und die Vemetzungsdichte des Elastomers bestimmt wird. Nimmt die Vernetzungsdichte in einem Elastomer zu, so steigt auch der Spannungswert 300 %, jedoch wird die Hochgeschwindigkeitsreißenergie gesenkt. Das hat zur Folge, dass die Profilhaftbarkeit gegenüber Ausbrüchen verringert wird. Wird die Vernetzungsdichte aber erhöht, sinkt der Spannungswert 300 % und die Hochgeschwindigkeitsreißenergie wird größer. Solche Laufstreifenmischungen weisen zwar eine verbesserte Beständigkeit gegen Profilausbrüchen auf, jedoch wird die Schnittbeständigkeit herabgesetzt. Erfindungsgemäß konnte festgestellt werden, dass es möglich wird, durch genannte Bestandteile und durch eine gezielte Kombination der Werte der Hochgeschwindigkeitsreißenergie und des Spannungswertes 300 % die Anfälligkeit gegenüber Profilausbrüchen und gegenüber Schnittverletzungen zu verringern. Durch die angegebene Mischungszusammensetzungen (a) - f)), die im vulkanisierten Zustand die angegebenen Werte der Hochgeschwindigkeitsreißenergie (H.S.T.E.-High Speed Tear Energy) und des Spannungswerts (Moduls) 300 % aufweisen, können Reifenlaufstreifen z.B. für Off-Road-Reifen bereitgestellt werden, die keine Einbußen in anderen Eigenschaften (z.B. Rollwiderstand) im Vergleich zu bisherigen Gummimischungen aufweisen, aber gleichzeitig eine hervorragende Beständigkeit gegenüber Ausbrüchen und Schnittverletzungen aufweisen.

Die in der erfindungsgemäßen Kautschukmischung zum Einsatz kommende schwefelvernetzbare Kautschukkomponente ist Naturkautschuk (NR) und/oder synthetisches Polyisopren (IR) mit einem cis-1,4-Anteil größer 90 Molprozent. Solch ein synthetisches Polyisopren kann durch stereospezifische Polymerisation in Lösung mit Ziegler-Natta-Katalysatoren oder unter Verwendung von fein verteilten Lithiumalkylen erhalten werden. Vorzugsweise soll für die erfindungsgemäße Kautschukmischung Naturkautschuk Verwendung finden. Durch den erfindungsgemäß angegebenen Anteil an Naturkautschuk und/oder synthetisches Polyisopren (60-100 pphr) wird die Festigkeit von Reifenlaufstreifen positiv beeinflusst. Außerdem können 0-40 pphr zumindest eines weiteren Dienelastomer eingesetzt werden. Als günstig hat sich dabei erwiesen, wenn das weitere Dienelastomer ausgewählt ist aus Polybutadien (BR), Styren-Butadien-Copolymer, Ethylen-Propylen-Dien-Terpolymer, Polyisopren mit einem cis 1,4-Anteil kleiner 90 Molprozent, Acrylnitril-Butadien-Copolymer und Mischungen hieraus. Besonders bevorzugt ist dabei, wenn als weiteres Dienelastomer emulsions- oder lösungspolymerisiertes Styren-Butadien-Copolymer verwendet wird.

Zur Verstärkung der Kautschukmatrix ist ein Verschnitt von gefällter hochdisperser Kieselsäure und Ruß erforderlich. Dabei soll der Füllstoffanteil (Kieselsäure und Ruß) der Mischung zwischen 45 und 80 pphr betragen. Höhere Füllstoffanteil führen zu einem Abfall der Hochgeschwindigkeitsreißenergie und einem Abfall im Ermüdungswiderstand. Ein Optimum wird erreicht, wenn der Füllstoffanteil zwischen 50 und 70 pphr beträgt.

Der Anteil an Kieselsäure in der Mischung beträgt zwischen 5 und 35 pphr. Höhere Kieselsäuregehalte beeinflussen den Spannungswert und die Vulkanisationseigenschaften nachteilig. Vorzugsweise beträgt der Kieselsäureanteil zwischen 12 und 24 pphr. Wenn der Kieselsäuregehalt kleiner als 12 pphr beträgt, nimmt die Schnittbeständigkeit ab, wenn mehr als 24 pphr in der Kautschukmischung enthalten sind, wurde festgestellt, dass sich das Abriebsverhalten, des Reifenlaufstreifens verschlechtert. Die in der erfindungsgemäßen Kautschukmischung zur Anwendung kommende Kieselsäure ist aus dem Stand der Technik bekannt. So sollen Kieselsäuren mit einer BET-Oberfläche von 145-270 $m^2$/g (ASTMD 5604) einer CTAB-Zahl von 120-285 $m^2$/g (ASTMD 3765) und einem Porenvolumen von 0,7-1,7 ml/g (DIN 66133) Verwendung finden. Als Kieselsäure kann somit z.B. VN 3 (Handelsname der Firma Degussa) zum Einsatz kommen. Um eine Bindung der Kieselsäure an das Polymersystem zu gewährleisten, ist es erforderlich, dass die Oberfläche der Kieselsäure aktiviert wird. Als Aktivierungsmittel können Silane verwendet werden, wie z.B. das Bis-3-(triethoxysilylpropyl)tetrasulfid (TESPT), das z.B. auf ein Trägermaterial (Ruß) aufgebracht sein kann. Prinzipiell können auch entsprechende Verbindungen, wie z.B. das Disulfid des TESPT zum Einsatz kommen. Der Aktivierungsgrad, bezogen auf die Oberfläche der Kieselsäure, muss ≤ 40 % betragen, da höhere Konzentrationen an Aktivierungsmitteln einen Anstieg der Vernetzungsdichte des Polymers bewirken und somit auch einen Abfall in der Hochgeschwindigkeitsreißenergie. Bezogen auf die maximale Konzentration der Kieselsäure in der Kautschukmischung (35 pphr) müßte man also an z.B. reines TESPT 1,05 pphr in herkömmlicher Art und Weise in die Mischung hinzugeben, um den gewünschten Aktivierungsgrad zu erhalten.

Des Weiteren ist es erforderlich, in die Kautschukmischung 10-75 pphr Ruß als Füllstoff einzumischen. Zu diesen Anteilen soll nicht der Ruß gezählt werden, der eventuell als Trägermaterial für das Aktivierungsmittel der Kieseläsure verwendet wird. Die Ruße sollen folgende Charakteristika aufweisen: Jodabsorptionszahl 70-180 mg Jod/g (ASTMD 1510), DBP-Zahl 70-160 ml/100 g (ASTMD 2414), CTAB-Zahl 50-155 $m^2$/g (ASTMD 3765), Crushed DBP-Zahl 55-140 ml/100 g (ASTMD 3493) und eine mittlere Partikelgröße von 10-30 nm.

Zur Einstellung des angestrebten Spannungswertes 300 % wird ein Resorcin-Formaldehyd-Harz eingesetzt. Es konnte festgestellt werden, dass damit der Spannungswert 300 % angehoben werden kann, ohne Einbußen in der Hochgeschwindigkeitsreißenergie hinnehmen zu müssen. Die einzelnen Komponenten, d.h. Resorcin und der Methylenspender (z.B. HMMM-Hexamethoxymethylenmelamin) werden in die Kautschukmischung eingemischt. Möglich sind auch vorkondensierte Resorcin-Formaldehyd-Harze, wie z.B. Penacolite der Fa. INDSPEC. Die Menge an Resorcin-Formaldehyd-Harz, d.h. die Summe an beiden Komponenten, beträgt 1-5 pphr.

Als weitere übliche Zusatzstoffe und Vernetzungschemikalien werden dem Fachmann übliche Substanzen beigemischt. So kann die erfindungsgemäße Kautschukmischung z.B. Stearinsäure, Zinkoxid, Alterungsschutzmittel und weitere Verarbeitungshilfsmittel, wie z.B. Weichmacher, enthalten. Als Weichmacher kann z.B. Mineralöl Verwendung finden. Aufgrund des relativ hohen Anteils an Füllstoffen beträgt vorzugsweise die Menge an eingesetztem Mineralöl zwischen 2 und 5 pphr.

Für die Schwefelvulkanisation der erfindungsgemäßen Kautschukmischung können herkömmliche Vulkanisationssysteme eingesetzt werden. So ist es z.B. möglich, 0,8-2,0 pphr Schwefel und 0,3-1,5 pphr Primär- und Sekundärbeschleuniger der Kautschukmischung zuzugeben. Als Beschleuniger werden vorzugsweise Sulfenamide, wie z.B. CBS, oder TBBS verwendet. Als sekundäre Beschleuniger können z.B. Guanidine, wie das DPG, oder Benzthiazolderivate, wie MBT, eingesetzt werden. Die Gesamtmenge an Vernetzungschemikalien, d.h. die Summe an Schwefel und Beschleuniger sollte 3 pphr nicht überschreiten. Höhere Menge an Vernetzungsmitteln führen zu einem drastischen Abfall der Hochgeschwindigkeitsreißenergie und einem Abfall im Ermüdungswiderstand.

Die angegebenen Kautschukbestandteile werden auf herkömmliche Art und Weise gemischt. Nach erfolgter Herstellung der Fertigmischung kann diese weiterverarbeitet werden. So kann die erfindungsgemäße Kautschukmischung für Reifenlaufstreifen verwendet werden, die im Allgemeinen nach einem Kalandrierprozess auf den Reifenrohling aufgelegt werden.

Nach der Vulkanisation der Kautschukmischung besitzen die erfindungsgemäßen Gummimischungen eine Hochgeschwindigkeitsreißenergie ≥ 12 MJ/$m^3$ und einen Spannungswert 300 % zwischen 10 und 16 MPa. Vorzugsweise beträgt die Hochgeschwindigkeitsreißenergie 12-20 MJ/$m^3$. Der Spannungswert 300 % soll einen Wert vorzugsweise von 12-15 MPa aufweisen.

Die angegebenen Spannungswerte 300 % (Modul 300 %) wurden an vulkanisierten Proben nach der DIN 53504 ermittelt. Die Spannungswerte wurden dreifach bestimmt und dabei eine Standardabweichung von 1 % ermittelt. Die Bestimmung der Hochgeschwindigkeitsreißenergie der vulkanisierten Proben erfolgte über einen abgewandelten Schlag-Biege-Versuch nach DIN 53448. Die Messung der Hochgeschwindigkeitsreißenergie erfolgte vierfach und mit einer Standardabweichung von 5 %. Das Prinzip dieser Messung besteht darin, dass die Probe auf Zug mit hoher abnehmender Verformungsgeschwindigkeit beansprucht wird. Dabei wird die Probe bis zum Riss gedehnt und die dafür benötigte Energie aufgezeichnet.

Anhand eines Ausführungsbeispiels soll die Erfindung näher erläutert werden.

In der Tabelle 1 ist die erfindungsgemäße Kautschukmischung 6 und deren Eigenschaften im vulkanisierten Zustand im Vergleich zu herkömmlichen dargestellt. Des Weiteren können der Tabelle 1 Werte bezüglich Ausbrüche und Schnitte in Reifenlaufflächen entnommen werden. Es wird ersichtlich, dass das Verhältnis zwischen Ausbrüchen und Schnitten bei Verwendung der erfindungsgemäßen Kautschukmischung 6 wesentlich verbessert wurde. Deshalb kann diese Mischung für Laufstreifen von stark beanspruchten Reifen, wie z.B. von Off-Road-Fahrzeugen, eingesetzt werden. Die Voraussetzung für solche Mischungen ist die angegebene Kombination der Kautschukbestandteile, die im vulkanisierten Zustand die entsprechenden Spannungswerte 300 % (M-300) und Hochgeschwindigkeitsreißenergie (H.S.T.E.) aufweisen.

Tabelle 1:

|  |  | Beispiel 1 | Beispiel 2 | Beispiel 3 | Beispiel 4 | Beispiel 5 | Beispiel 6 erfindungsgemäß |
|---|---|---|---|---|---|---|---|
| **Rezept** |  |  |  |  |  |  |  |
| S-SBR | phr | 60 | - | - | - | - | - |
| BR | phr | 10 | - | 15 | - |  | - |
| NR | phr | 30 | 100 | 85 | 100 | < | < |
| Ruß A    *** | phr | 36 | - | - | - | - | - |
| Ruß B    *** | phr | 20 | - | - | - | - | - |
| Ruß C    *** | phr |  | - 46 | 44, | - | - | - |
| Ruß D    *** | phr |  | - - | - | 45 | 48 | < |
| Silica, VN3 | phr | - | 8 | 16 | 8 | 16 | < |
| X50S     * | phr | - | 2 | - | - | 0,5 | < |
| Resorcin | phr | - | - | - | - | - | 1 |
| HMMM65%      ** | phr | - | - | - | - | - | 2 |
| Schwefel | phr | 1,1 | 1,5 | < | < | < | < |
| CBS | phr | 1,4 | 1 | < | < | < | < |
| TBBS | phr | - |  |  |  |  |  |
| **Physikallsche Elgenschatten bei 100 +/- 5 % Vernetzung** |  |  |  |  |  |  |  |
| Heizzeit bei 150 °C |  | 25 | 20 | 25 | 20 | 20 | 15 |
| Festigkeit | MPa | 18,5 | 23,3 | 20,1 | 22,7 | 21,5 | 20,4 |
| Bruchdehnung | % | 665 | 532 | 666 | 582 | 576 | 508 |
| M-100 | MPa | 1,5 | 2,1 | 1,3 | 2 | 1,7 | 2 |
| M-300 | MPa | 6,7 | 11,9 | 5,7 | 10,2 | 10,5 | 11,1 |
| H.S.T.E. | MJ/m^3 | 12,3 | 9,7 | 19,5 | 10,9 | 18,7 | 14,7 |
| Härte, 23 °C | Sh. A | 58 | 61,5 | 58 | 62,4 | 60,5 | 64,4 |
| Rückprallelastizität, | % | 38 | 41 | 32,5 | 38,7 | 36,4 | 38,6 |
| **Ergebnis des Reifentests: Bewertung der Ausbrüche Schnitte in der Lauffläche,** |  |  |  |  |  |  |  |
| **Werte < 100 bedeuten Verbesserung** |  |  |  |  |  |  |  |
| Ausbrüche | % | 40 | 100 | 20 | 64 | 33 | 35 |
| Schnitte | % | 330 | 100 | 112 | 106 | 80 | 78 |

* Silan der Fa. Degussa AG

** Gemisch aus 65 % verschiedener Melaminharze (Hauptkomponente Hexamethoxymethylmelamin) und 35 % gefällter Kieselsäure (z.B. CYREZ 964 der Fa. CYTEC INDUSTRIES BV)

*** Ruße A und B mit mittlerer Partikelgröße von 25 bis 40 nm Ruße C und D mit mittlerer Patikelgröße < 25 nm

Die M-300-Werte wurden nach DIN 53504 ermittelt.

Die Bestimmung der Hochgeschwindigkeitsreißenergie, die auf das Ausgangsvolumen der Probe bezogene Reißenergie darstellt, erfolgte an einem 50-J-Pendel-Schlagwert 53304 der Karl Frank GmbH mit elektronischer Winkelabmessung und 120-g-Joch. Die Probe entspricht in der Kontur dem GRAVES-Prüfkörper nach ASTM D 624-86. Abweichend davon besitzt sie an beiden Enden eine einseitige Verstärkung von (2.0±0.5)mm, die zum besseren Einspannen der Probe dient. Im 40 mm langen Dehnungsbereich (Länge zwischen den Einspannklemmen) beträgt die Dicke der Probe (2.5± 0.5)mm. An beiden 30 mm langen Einspannbereichen beträgt die Dicke demnach (4.5±0.5)mm. Für jede Prüfserie werden 4 Proben aus einem entsprechend geformten Vulkanisat gestanzt (Entnahme der Probe aus der Mitte des Rahmens). Die Ausstanzung erfolgt längs zur Walzrichtung, damit gewährleistet wird, dass die Rissrichtung während der H.S.T.E.-Prüfung quer zur Walzrichtung liegt. Die Prüfung erfolgt bei Raumtemperatur und frühestens 16 h nach der Vulkanisation. Die Messung der H.S.T.E.-Werte erfolgt in abgewandelter Form nach DIN 53448 (Entwurf Mai 1987). Es handelt sich hierbei um einen Zugversuch mit hoher, stetig abnehmender Verformungsgeschwindigkeit. Die Probe wird bis zum Riss gedehnt und die dafür benötigte Energie gemessen.

Durchführung der H.S.T.E.-Messung:

Vor dem Einspannen der Probe zwischen Joch und feststehender Halterung in waagerechter Richtung wird die Dicke des Prüfkörpers gemessen und in einem an das Messgerät gekoppelten PC eingegeben. Das Pendelschlagwerk des Messgeräetes besitzt einen drehbar gelagerten Hammer, der über die Pendelstange mit einem Winkelgeber verbunden ist. Der Hammer lässt sich bei maximaler Auslenkung arretieren und hat dort gegenüber der Nulllage ein festgelegtes Arbeitsvermögen. Am tiefsten Punkt der Pendelbahn liegt das Querjoch auf einer Schiene, wo es von den beiden Schlagfinnen des gabelförmigen Hammers mitgenommen werden kann. Nach dem Auslösen trifft der Pendelhammer auf das Joch (an dieser Stelle besitzt das Pendel eine Geschwindigkeit von 3,8 m/s und der Fallwinkel $\alpha$ 157,3°), dehnt die Probe bis zum Riss und schwingt zur anderen Seite durch, wo der Wendepunkt von der Maschine automatisch erfasst wird. Aus der Differenz der Amplituden vor und nach dem Schlag lässt sich die dafür benötigte Energie bestimmen. Die Korrektur der Schlagarbeit erfolgt auf einem mit der Maschine verbundenen PC. Das Programm berechnet aus der Jochmasse, der Pendelfrequenz und dem Auslenkwinkel einen Korrekturwert. Er soll den Energieaufwand für die Jochbeschleunigung kompensieren und wird von der gemessenen Schlagarbeit abgezogen. Der Quotient aus der so ermittelten Reißenergie und dem verfomten Probenvolumen ist der H.S.T.E.-Wert.

Auswertung der Messung

| Dicke der Probe | $h$ [mm] |
|---|---|
| Schlagarbeit | $A_z$ [J] |
| korrigierte Schlagarbeit | $A_{cor}$ [J] |
| Schlagzugzähigkeit | $a_z$ [kJ/m$^2$] |
| H.S.T.E.-Wert | HSTE [MJ/m$^3$] |

| $A_Q$ | [J] | Arbeitskorrektur |
|---|---|---|
| $A_P$ | [J] | patentielles Arbeitsvermögen des Pendels |
| $A_Z$ | [J] | gesamte Schlagarbeit |
| $m_Q$ | [kg] | Masse des Querjochs |
| $m_P$ | [kg] | reduzierte Masse des Pendels |

| $g$ | [m/s$^2$] | Erdbeschleunigung |
|---|---|---|
| $L_{red}$ | [m] | reduzierte Pendellänge |
| $\alpha$ | [°] | Fallwinkel des Pendels |
| $t$ | [s] | Pendel-Schwingungsdauer |

Die Arbeitskorrektur errechnet sich aus der plastischen Verformung und der kinetischen Energie des Querjochs nach E DIN EN 28 256 (Entwurf August 1994)

$$A_Q = \frac{m_Q}{m_P} \cdot \left[ \frac{A_P}{1 + m_Q / m_P} \div \ddot{A}_P - A_z \right] \qquad (1)$$

Angesichts der Meßunsicherheit ist es vertretbar, die Variable $A_z$ näherungsweise durch einen mittleren Wert zu ersetzen und so mit einer konstanten Korrektur zu arbeiten. Unter der Annahme

$$A_z = \frac{A_P}{2} \qquad (2)$$

$$A_Q = \frac{1}{2} \cdot A_P \cdot \frac{m_Q}{m_P} \cdot \frac{3 + m_Q / m_P}{1 + m_Q / m_P} \qquad (3)$$

Diese Gleichung läßt sich vereinfachen, wenn man davon ausgeht, daß die Masse des Querjochs gegenüber der reduzierten Pendelmasse sehr klein ist. Damit strebt das Verhältnis $m_Q / m_P$ gegen 0 und der letzte Bruch gegen 3.

$$A_Q = \frac{3}{2} \cdot A_P \cdot \frac{m_Q}{m_P} \qquad (4)$$

$$m_P = \frac{A_P}{g \cdot L_{red} \cdot (1 - \cos \alpha)} \qquad (5)$$

$$L_{red} = \frac{g \cdot t^2}{4 \cdot \Pi^2} \qquad (6)$$

Mit diesen beiden Formeln ergibt sich für die Arbeitskorrektur:

$$A_Q = \frac{3 \cdot g^2 \cdot t^2}{8 \cdot \Pi^2} \cdot (1 - \cos \alpha) \cdot m_Q \qquad (7)$$

$A_Q = 1.318$ J für das 50-J-Pendelschlagwerk 53304 mit 120-g-Joch und
   $g = 9.81$ m/s
   $t = 60$ s/48 (Schwingungen)
   $\alpha = 157.3°$
   $m_Q = 0.12$ kg

$$A_{cor} = A_z - A_Q \qquad (8)$$

$$a_z = \frac{A_{cor}}{h \cdot b} \cdot 10^3 \, kJ/m^2 \qquad (9)$$

$$HSTE = \frac{A_{cor}}{h \cdot b \cdot l} \cdot 10^3 \, MJ/m^3 \qquad (10)$$

| $A_{cor}$ | [J] | korrigierte Schlagarbeit |
|---|---|---|
| $a_z$ | [kJ/m$^2$] | Schlagzugzähigkeit |

(fortgesetzt)

| h | [mm] | Probendicke |
|---|------|-------------|
| b | [mm] | Breite der Probe |
| l | [mm] | Ausgangslänge der Probe |
| HSTE | [MJ/m$^3$] | HSTE-Wert |

Für die HSTE-Prüfung sind folgende Probenabmessungen konstant:

b = 12.5 mm

l = 40 mm

**Patentansprüche**

1. Schwefelvernetzbare Reifenlaufstreifenkautschukmischung zumindest folgende Bestandteile, bezogen auf 100 Gewichtsteile aller Kautschukkomponenten, enthaltend:

   a) 60-100 pphr Naturkautschuk (NR) und/oder synthetisches Polyisopren (IR) mit einem cis-1,4-Anteil > 90 Molprozent,

   b) 5-35 pphr aktivierte Kieselsäure, wobei der Aktivierungsgrad bezogen auf die Oberfläche der Kieselsäure ≤ 40 % beträgt,

   c) 10-75 pphr Ruß, wobei der Füllstoffanteil von b) und c) 45-80 pphr beträgt,

   d) 0-40 pphr zumindest eines weiteren Dienelastomers,

   e) zumindest ein Resorcin-Formaldehyd-Harz,

   f) weitere übliche Zusatzstoffe und Vernetzungschemikalien,

   wobei die Kautschukmischung im vulkanisierten Zustand eine Hochgeschwindigkeitsreißenergie ≥ 12 MJ/m$^3$ und einen Spannungswert 300 % 10-16 MPa aufweist.

2. Reifenlaufstreifenkautschukmischung nach Anspruch 1, **dadurch gekennzeichnet, daß** sie 1 bis 5 pphr Resorcin-Formaldehyd-Harz enthält.

3. Reifenlaufstreifenkautschukmischung nach Anspruch 1, **dadurch gekennzeichnet, daß** sie als weiteres Dienelastomer Polybutadien (BR), Styrol-Butadien-Copolymer, Styrolisopren-Butadien-Terpolymer, Ethylen-Propylen-Dien-Terpolymer, Polyisopren mit einem cis-1,4-Anteil < 90 Molprozent, Acrylnitril-Butadien-Copolymer und Mischungen hieraus enthält.

4. Reifenlaufstreifenkautschukmischung nach Anspruch 2, **dadurch gekennzeichnet, daß** sie als weiteres Dienelastomer Styrol-Butadien-Copolymer enthält.

5. Reifenlaufstreifenkautschukmischung nach zumindest einem der vorhergehenden Ansprüche, **dadurch gekennzeichnet,daß** sie 12-24 pphr Kieselsäure enthält.

6. Reifenlaufstreifenkautschukmischung nach zumindest einem der vorhergehenden Ansprüche, **dadurch gekennzeichnet, daß** sie im vulkanisierten Zustand eine Hochgeschwindigkeitsreißenergie von 12-20 MJ/m$^3$ aufweist.

7. Reifenlaufstreifenkautschukmischung nach zumindest einem der vorhergehenden Ansprüche, **dadurch gekennzeichnet, daß** sie im vulkanisierten Zustand einen Spannungswert 300 % von 12-15 MPa aufweist.

8. Fahrzeugluftreifen, **dadurch gekennzeichnet, daß** bei dessen Herstellung für den Laufstreifen eine Kautschukmischung nach zumindest einem der vorhergehenden Ansprüche verwendet worden ist.

**Claims**

1. Sulphur-cross-linkable rubber mixture for tyre tread strips, containing at least the following constituent ingredients relative to 100 parts by weight of all of the rubber components:

a) 60-100 pphr natural rubber (NR) and/or synthetic polyisoprene (IR) having a cis-1,4 proportion > 90 mole percent,

b) 5-35 pphr activated silica, the degree of activation relative to the surface of the silica being ≤ 40 %,

c) 10-75 pphr carbon black, the filler proportion of b) and c) being 45-80 pphr,

d) 0-40 pphr at least of an additional diene elastomer,

e) at least one resorcinol formaldehyde resin, and

f) further conventional additional substances and cross-linking chemicals,

wherein the rubber mixture has, in the vulcanised state, a high-speed tearing energy ≥ 12 MJ/m$^3$ and a tensile stress value 300 % 10-16 MPa.

2. Rubber mixture for tyre tread strips according to claim 1, **characterised in that** it contains 1 to 5 pphr resorcinol formaldehyde resin.

3. Rubber mixture for tyre tread strips according to claim 1, **characterised in that** it contains, as the additional diene elastomer, polybutadiene (BR), styrene-butadiene copolymer, styrene-isoprene-butadiene terpolymer, ethylene-propylene-diene terpolymer, polyisoprene having a cis-1,4 proportion < 90 mole percent, acrylonitrile-butadiene copolymer and mixtures thereof.

4. Rubber mixture for tyre tread strips according to claim 2, **characterised in that** it contains, as the additional diene elastomer, styrene-butadiene copolymer.

5. Rubber mixture for tyre tread strips according to at least one of the preceding claims, **characterised in that** it contains 12-24 pphr silica.

6. Rubber mixture for tyre tread strips according to at least one of the preceding claims, **characterised in that** it has, in the vulcanised state, a high-speed tearing energy of 12-20 MJ/m$^3$.

7. Rubber mixture for tyre tread strips according to at least one of the preceding claims, **characterised in that** it has, in the vulcanised state, a tensile stress value 300 % of 12-15 MPa.

8. Pneumatic vehicle tyre, **characterised in that** a rubber mixture according to at least one of the preceding claims has been used for the production of the tread thereof.

**Revendications**

1. Mélange de caoutchouc réticulable par le soufre pour la bande de roulement d'un pneumatique contenant au moins les éléments suivants par rapport à 100 parties en poids de tous les composants du caoutchouc :

a) entre 60 pphr (parties pour 100 parties de caoutchouc, en poids) et 100 pphr de caoutchouc naturel (NR) et/ou de polyisoprène synthétique (IR) comprenant une partie cis-1,4 supérieure à 90 pour cent de masse moléculaire,

b) entre 5 pphr et 35 pphr d'acide silique activé, où le degré d'activation par rapport à la surface de l'acide silique est inférieur ou égal à 40 %,

c) entre 10 pphr et 75 pphr de noir de carbone, où la partie constituant la charge de b) et de c) est comprise entre 45 pphr et 80 pphr,

d) entre 0 pphr et 40 pphr au moins d'un autre élastomère diène,

e) ,au moins une résine de résorcine-formaldéhyde,

f) d'autres additifs habituels et d'autres produits chimiques de réticulation,

où le mélange de caoutchouc présente, à l'état vulcanisé, une énergie de déchirure à grande vitesse supérieure ou égale à 12 MJ/m$^3$ et une valeur de contrainte à 300 % comprise entre 10 MPa et 16 MPa.

2. Mélange de caoutchouc pour la bande de roulement d'un pneumatique selon la revendication 1, **caractérisé en ce que** le mélange de caoutchouc pour la bande de roulement d'un pneumatique contient entre 1 pphr et 5 pphr de résine de résorcine-formaldéhyde.

**3.** Mélange de caoutchouc pour la bande de roulement d'un pneumatique selon la revendication 1, **caractérisé en ce que** le mélange de caoutchouc pour la bande de roulement d'un pneumatique contient, comme autre élastomère diène, du polybutadiène (BR), un copolymère de styrène et de butadiène, un terpolymère de styrène, d'isoprène et de butadiène, un terpolymère d'éthylène-propylène-diène, un polyisoprène contenant une partie cis-1,4 inférieure à 90 pour cent de masse moléculaire, un copolymère d'acrylonitrile et de butadiène et des mélanges de ces éléments.

**4.** Mélange de caoutchouc pour la bande de roulement d'un pneumatique selon la revendication 2, **caractérisé en ce que** le mélange de caoutchouc pour la bande de roulement d'un pneumatique contient, comme autre élastomère diène, un copolymère de styrène et de butadiène.

**5.** Mélange de caoutchouc pour la bande de roulement d'un pneumatique selon au moins l'une des revendications précédentes, **caractérisé en ce que** le mélange de caoutchouc pour la bande de roulement d'un pneumatique contient entre 12 pphr et 24 pphr d'acide silique.

**6.** Mélange de caoutchouc pour la bande de roulement d'un pneumatique selon au moins l'une des revendications précédentes, **caractérisé en ce que** le mélange de caoutchouc pour la bande de roulement d'un pneumatique présente, à l'état vulcanisé, une énergie de déchirure à grande vitesse comprise entre 12 MJ/m$^3$ et 20 MJ/m$^3$.

**7.** Mélange de caoutchouc pour la bande de roulement d'un pneumatique selon au moins l'une des revendications précédentes, **caractérisé en ce que** le mélange de caoutchouc pour la bande de roulement d'un pneumatique présente, à l'état vulcanisé, une valeur de contrainte à 300 % comprise entre 12 MPa et 15 MPa.

**8.** Pneumatique **caractérisé en ce que**, lors de la fabrication de sa bande de roulement, on utilise un mélange de caoutchouc selon au moins l'une quelconque des revendications précédentes.